# EUROPEAN PATENT APPLICATION

(11) **EP 3 306 076 A1**
(43) Date of publication of application: **11.04.2018**
(21) Application number: 17191262.9
(22) Date of filing: 15.09.2017
(51) Int. Cl.: F03D 7/02

(54) **WIND TURBINE SYSTEM OR METHOD OF CONTROLLING WIND TURBINE SYSTEM**

(30) Priority: 06.10.2016 JP 2016197710
(71) Applicant: Hitachi, Ltd., Tokyo 100-8280 (JP)
(72) Inventor: YAMAMOTO, Yukio, Tokyo, 100-8280 (JP); KAKUYA, Hiromu, Tokyo, 100-8280 (JP)
(74) Representative: MERH-IP Matias Erny Reichl Hoffmann Patentanwälte PartG mbB

(57) **Abstract**

To provide a wind turbine system or a method of controlling the wind turbine system capable of securing stability in pitch control when a sudden change of wind speed is detected and preventing increase of a load on equipment to thereby improve reliability. A wind turbine system includes blades 3 rotating by receiving the wind, a pitch drive device controlling a pitch angle of each blade 3 and a control device 100 outputting a control signal for suppressing a movement of the pitch angle to a fine direction to the pitch drive device when an increase in wind speed for a prescribed amount or more is detected while performing pitch angle control so that a rotational speed of the blades 3 or equipment rotating in conjunction with rotation of the blades 3 maintains a rated rotational speed.

## Description

### Technical Field

The present invention relates to a wind turbine system or a method of controlling the wind turbine system, and particularly relates to a wind turbine system suppressing overspeed of a rotor.

### Background Art

In recent years, global warming due to emission of carbon dioxide, depletion of fossil fuel and the like are regarded as problems from a viewpoint of environmental protection. In response to this, power generation equipment that uses renewable energy obtained from nature such as wind power and sunlight attracts attention as power generation equipment not using fossil fuel and capable of suppressing emission of carbon dioxide.

As power generation equipment using renewable energy, solar power generation equipment is generally used. However, the output varies directly depending on solar radiation in the solar power generation equipment, therefore, output fluctuation is high and power is not capable of being generated during nighttime. Whereas in the wind turbine system, relatively stable power generation can be performed any time day or night by installing the system by selecting a place where wind conditions such as a wind speed and a wind direction are stable. The wind turbine system is attracting attention as it can be placed offshore where the wind speed is higher and variation in wind conditions is smaller than that onshore.

There is a case where the wind direction and the wind speed largely vary due to worsening of weather or the like even in the wind turbine system installed in places where variation of wind conditions is small, and it is necessary to continue power generation as stable as possible in such case. Also in the case where the wind direction or the wind speed largely varies, rotational speeds of rotation systems such as a rotor and a generator and a power generation amount in the wind turbine system are controlled to be constant by changing an amount of receiving the wind by changing a pitch angle of blades that receive the wind. In the control of rotational speeds, an excessive load is given to the equipment when the rotational speed exceeds a rated speed to cause overspeed. Furthermore, an overspeed state continues and the rotational speed exceeds a prescribed value, an operation makes a transition to a shutdown operation for protecting the equipment which hinders continuation of power generation, therefore, response speed is generally set to be higher in the control of the pitch angle.

In the case where wind turbines are installed offshore, a floating type in which floating bodies are moored on the seabed and wind turbine systems are installed thereover is required in areas where there are many deep water places like Japan. As vibration occurs in floating bodies by waves and the wind in the floating type, vibration suppression control for suppressing vibration of floating bodies by changing a force of receiving the wind by the pitch angle control is performed, and high responsivity is required for the pitch angle control.

In such pitch angle control, a sudden change of the wind speed such as a gust of wind will be a problem. Variation of pitch angles becomes oscillatory as the responsivity of the pitch angle control is high. The pitch angle changed to a feather side (releasing the wind) once returns to a fine side (receiving the wind) by a transient response, and a large amount of wind is received in a state of a high wind speed, there is a possibility that a sudden increase exceeding an allowable value of a load on the equipment occurs. The overspeed tends to occur by the transient response of the pitch angle control, and there may be a case where the operation makes a transition to the shutdown operation for protecting the equipment which hinders continuation of power generation.

In response to such sudden change of wind speed, for example, a wind turbine system including a blade pitch-angle control means for controlling a pitch angle of wind-turbine blades is disclosed in Patent Literature 1, in which the blade pitch-angle control means includes a judgement means for determines whether an output detected by an output detection means for detecting the output has exceeded an over-output threshold value for determining the over output or more and a pitch-angle setting means for setting the blade pitch angle in a feather side where an aerodynamic output is reduced when the output exceeds the over-output threshold value and for maintaining the pitch angle for a prescribed period of time.

### Citation List

### Patent Literature

Patent Literature 1: JP-A 2006-233912

### Summary of Invention

### Technical Problem

However, in the wind turbine system in Patent Literature 1, a target value of the pitch angle suddenly changes, therefore, pitch-angle control may be unstable. It is also necessary to set the pitch angle to the feather side in good time for securing safety, and power generation efficiency is reduced for that.

An object of the present invention is to provide a wind turbine system or a method of controlling the wind turbine system capable of securing stability in pitch control when a sudden change of wind speed is detected and preventing increase of a load on equipment to thereby improve reliability.

### Solution to Problem

In order to solve the above problems, a wind turbine system according to the present invention includes blades rotating by receiving the wind, a pitch drive device controlling a pitch angle of each blade and/or a control device outputting a control signal for suppressing a movement of the pitch angle to a fine direction to the pitch drive device when an increase in wind speed for a prescribed amount or more is detected while performing pitch angle control so that a rotational speed of the blades or equipment rotating in conjunction with rotation of the blades maintains a rated rotational speed.

Moreover, a method of controlling a wind turbine system according to the present invention is a method of controlling the wind turbine system including blades rotating by receiving the wind, a pitch angle of which is capable of being controlled, which includes the step of suppressing a movement of the pitch angle to a fine direction when an increase in wind speed for a prescribed amount or more is detected while performing pitch angle control so that a rotational speed of the blades or equipment rotating in conjunction with rotation of the blades maintains a rated rotational speed.

### Advantageous Effects of Invention

According to the present invention, it is possible to provide a wind turbine system or a method of controlling the wind turbine system capable of securing stability in pitch control when a sudden change of wind speed is detected and preventing increase of a load on equipment to thereby improve reliability.

Problems, components and advantages other than the above will be clarified by the following description of embodiments. Brief Description of Drawings
[Fig. 1] Fig. 1 is a view showing a schematic configuration of a wind turbine system according to an embodiment of the present invention.
[Fig. 2] Fig. 2 is a schematic view showing an example of the relation of a generated output, a rotational speed of a generator, a generator torque and a pitch angle in a wind turbine system.
[Fig. 3] Fig. 3 is a block diagram showing an overview of a pitch angle controller of a wind turbine system according to Embodiment 1.
[Fig. 4] Fig. 4 is a schematic view showing an example of the relation of input/output of a pitch-angular speed limiting unit according to Embodiment 1.
[Fig. 5] Fig. 5 is a schematic diagram showing an example of temporal variation of a wind-speed change detection signal and a pitch angular speed limit value in the pitch-angular speed limiting unit according to Embodiment 1.
[Fig. 6] Fig. 6 is a schematic diagram showing the relation of a wind speed, a wind-speed change rate, the wind-speed change detection signal, a rotational speed, the pitch angle and a tower load in accordance with existence of application of the present invention according to Embodiment 1.
[Fig. 7] Fig. 7 is a block diagram showing an overview of a pitch angle controller of a wind turbine system according to Embodiment 2.
[Fig. 8] Fig. 8 is a schematic diagram showing an example of temporal variation of a wind-speed change detection signal and a pitch angular speed limit value in a pitch-angular speed limiting unit according to Embodiment 2.
[Fig. 9] Fig. 9 is a schematic diagram showing the relation of a wind speed, a generated output, the wind-speed change detection signal, a rotational speed, a pitch angle and a tower load in accordance with existence of application of the present invention according to Embodiment 2.
[Fig. 10] Fig. 10 is a view showing a schematic configuration of a floating wind turbine system according to an embodiment of the present invention.
[Fig. 11] Fig. 11 is a block diagram showing an overview of a pitch angle controller of a wind turbine system according to Embodiment 3.
[Fig. 12] Fig. 12 is a schematic diagram showing an example of an action of suppression gains in a pitch-angular speed calculation unit according to Embodiment 3.
[Fig. 13] Fig. 13 is a schematic diagram showing an example of temporal variation of a wind-speed change detection signal and the suppression gains in the pitch-angular speed calculation unit according to Embodiment 3.
[Fig. 14] Fig. 14 is a schematic diagram showing the relation of a wind speed, the wind-speed change detection signal, a rotational speed, a pitch angle and a tower load in accordance with existence of application of the present invention according to Embodiment 3.

### Description of Embodiments

Hereinafter, embodiments of the present invention will be explained with reference to the drawings. In respective drawings, the same symbols are given to the same components and the detailed explanation for repeated portions is omitted.

### [Embodiment 1]

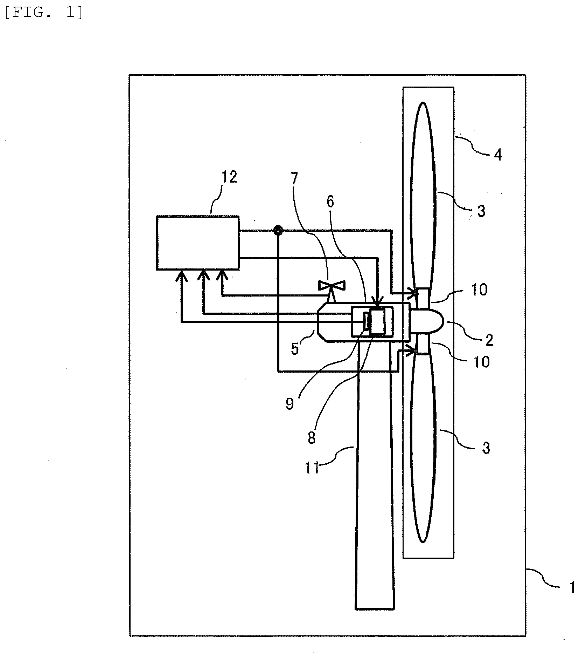

A wind turbine system according to Embodiment 1 will be explained with reference to Fig. 1 to Fig. 6. Fig. 1 is a schematic configuration diagram of the entire wind turbine system to which the present invention can be applied.

A wind turbine system 1 of Fig. 1 includes a rotatable rotor 4 including a hub 2 having a rotation shaft (not shown in the drawing) and plural blades 3 attached to the hub 2. The rotor 4 is supported so as to rotate by a nacelle 5 through a not-shown rotation shaft, and a rotation force of the rotor 4 is transmitted to a generator 6 inside the nacelle 5. When the blades 2 receive the wind, the rotor 4 rotates and the generator 6 is rotated by a rotational force of the rotor 4 to thereby generate the power. A wind direction/speed sensor 7 that measures a wind direction and a wind speed is provided above the nacelle 5.

A generator torque control device 8 that can control a generator torque is provided inside the generator 6, and the rotational speed of the rotor 4 or the generator 6 and generated output of the wind turbine system 1 can be controlled by changing the generator torque. Also in the generator 6, a rotational speed sensor 9 for detecting a rotational speed, a power sensor (not shown in the drawing) for measuring an effective power outputted by the generator and so on are also provided.

Each blade 3 includes a pitch-angle control device 10 capable of controlling an angle (pitch angle) of the blade 3 with respect to the wind, and wind power (wind volume) received by the blade 3 is controlled by changing the pitch angle, thereby changing a rotational energy of the rotor 4 with respect to the wind. Accordingly, the rotational speed and the generated output can be controlled in a wide wind speed region.

In the wind turbine system 1, the nacelle 5 is installed on a tower 11, having a mechanism (not shown in the drawing) rotatable with respect to the tower 11. The tower 11 supports a load of the blades 3 through the hub 2 and the nacelle 5, which is fixed to a base (not shown in the drawing) installed in a prescribed position on the ground, on the ocean or the like.

The wind turbine system 1 includes a controller 12. The generated output and the rotational speed of the wind turbine system 1 are controlled by controlling the generator torque control device 8 and the pitch-angle control device 10 by the controller 12 based on the rotational speed outputted from the rotational speed sensor 9, the wind direction and the wind speed outputted from the wind direction/speed sensor 7, the generated output outputted from the generator 6 and so on.

In Fig. 1, the controller 12 is installed outside the nacelle 5 or the tower 11 in the drawing, however, the controller 12 may be installed inside the nacelle 5 or the tower 11 as well as may be installed outside the wind turbine system 1.

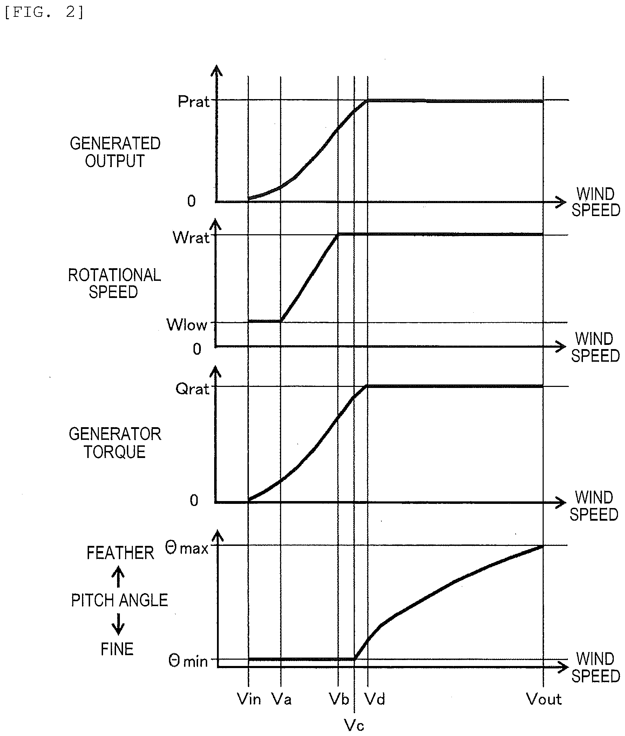

Fig. 2 shows an overview of power generation operation of the wind turbine system 1. Fig. 2 shows relations of the generated output, the rotational speed of the generator, the generator torque and the pitch angle with respect to the wind speed, and the overview of the power generation operation of the wind turbine system 1 will be explained with reference to the drawing. The horizontal axis of each graph represents the wind speed, and the wind speed is increased toward the right direction. The vertical axis of each graph represents that respective values of the generated output, the rotational speed and the generation torque are increased toward the upper direction. Concerning the pitch angle, the upper direction is a feather (releasing the wind) side and the lower direction is a fine (receiving the wind) side.

The power generation is performed within a range from a cut-in wind speed Vin at which the rotation of the rotor 4 is started to a cut-out wind speed Vout at which the rotation is stopped. A generated output value is increased until reaching a wind speed Vd with the increase of the wind speed, and the generated power is constant in speeds higher than the wind speed Vd.

The controller 10 controls the generator torque so that the rotational speed becomes constant (Wlow) from the cut-in wind speed Vin to a wind speed Va, and controls the generator torque by calculating the generator torque from the rotational speed so that the generated output with respect to the wind speed becomes the maximum in a range from the wind speed Va to a wind speed Vb in which the rotational speed is at a rated rotational speed Wrat or less. When the wind speed exceeds the wind speed Vb and the rotational speed reaches the rated rotational speed Wrat, the generator torque and the pitch angle are controlled so as to maintain the rated rotational speed Wrat. Basically, the generator torque is controlled for securing generated output. In the control of the generator torque, the generator torque is changed in accordance with the wind speed in a range from the wind speed Vb to the wind speed Vd until reaching a rated generator torque Qrat, and the rated generator torque Qrat is maintained in a range from the wind speed Vd to the cut-out wind speed Vout, so that generated output therebetween is a rated generated output Prat.

In the control of the pitch angle, the pitch angle is maintained in a fine side Θmin until reaching a wind speed Vc, then, the pitch angle is changed from the fine side Θmin to a feather side Θmax in accordance with the wind speed in a range from the wind speed Vc to the cut-out Vout. Though the control of the generator torque overlaps with the control of the pitch angle in a range from the wind speed Vc to the wind speed Vd in the example of Fig. 2, it is also preferable that the control of the generator torque and the control of the pitch angle may be independently executed by setting so that Vc=Vd to cancel the overlap.

In the present invention, while the (power generation) operation is performed so that the blade 3 or the equipment rotating in conjunction with the rotation of the blade 3 maintains the rated rotational speed Wrat by the pitch angle control at the wind speed Vc or more as shown in Fig. 2, a sudden increase of the wind speed is detected and a movement of the pitch angle to the fine side is suppressed, thereby preventing the load increase caused by oscillatory control of the pitch angle.

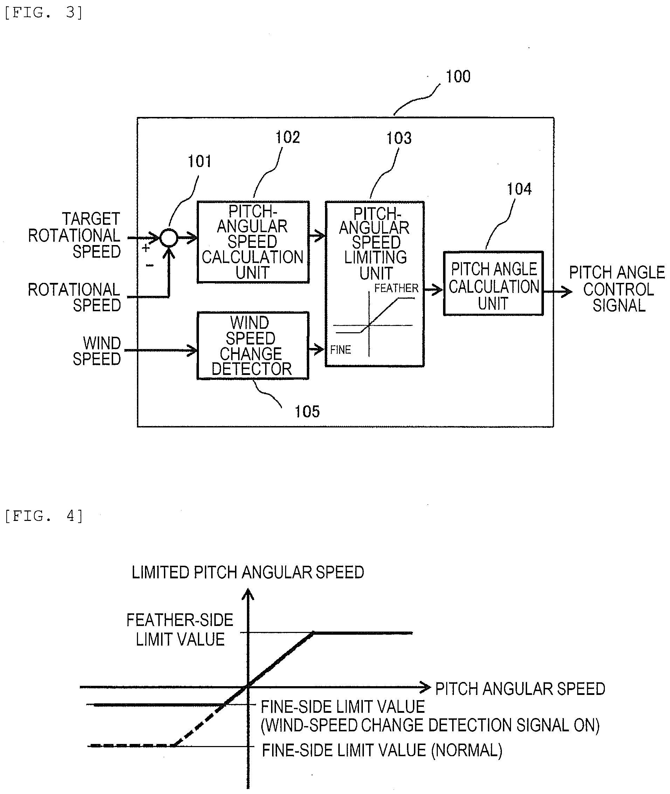

Fig. 3 is a block diagram showing an overview of an example of a pitch angle controller of the wind turbine system 1 according to Embodiment 1 of the present invention. A pitch angle control device 100 according to Embodiment 1 is provided in the controller 12, including a subtracter 101, a pitch-angular speed calculation unit 102, a pitch-angular speed limiting unit 103, a pitch angle calculation unit 104 and a wind speed change detector 105.

In the subtracter 101, a deviation between a target rotational speed and a rotational speed to be inputted is calculated, and the deviation is inputted to the pitch-angular speed calculation unit 102. In the pitch-angular speed calculation unit 102, a pitch angular speed is calculated from the inputted deviation and the pitch angular speed is inputted to the pitch-angular speed limiting unit 103. In the pitch-angular speed limiting unit 103, the inputted pitch angular speed is limited so as to be a limit value or less of the pitch angular speed determined by the ability of the pitch-angle control device 10 and so on, and the limited pitch angular speed is outputted. In the pitch angle calculation unit 104, the limited pitch angular speed is integrated and converted into a pitch angle, which is outputted as a pitch angle control signal. In the wind speed change detector 105, a change rate of wind speeds from the inputted wind speeds, and when a value is increased to a threshold value or more, a wind-speed change detection signal to be inputted to the pitch-angular speed limiting unit 103 is turned on for a period including a prescribed period Tr. While the change rate of the wind speed exceeds the threshold value, the prescribed period Tr is updated, and the wind-speed change detection signal is ON during a period in which the prescribed period Tr is added to the period during which the change rate of the wind speed exceeds the threshold value. Here, the reason why the prescribed period Tr is added is that the pitch angle control becomes stable and a possibility of generating a transient response is reduced by suppressing the movement to the fine side during the prescribed period even after the change rate does not exceed the threshold value. In the case where an increase of the wind speed for a prescribed amount or more is detected again in the prescribed period during which the movement to the fine direction of the pitch angle is suppressed, the prescribed period is started from a time point when the increase of the wind speed for a prescribed amount or more is detected again, and the prescribed period Tr is updated. In the pitch-angular speed limiting unit 103, the fine-side limit value is changed to a value closer to "0" than a normal value to suppress the movement of the pitch angle to the fine side while the wind-speed change detection signal is ON.

Fig. 4 shows an example of the relation of input/output of the pitch-angular speed limiting unit 103 according to Embodiment 1. In Fig. 4, the horizontal axis represents the pitch angular speed input and the vertical axis represents the limited pitch angular speed output. While the wind-speed change detection signal is ON, the fine-side limit value is drastically changed to a value close to "0". The fine-side limit value during the period in which the wind-speed change detection signal is ON can be set to "0". The closer to "0" the set value is, the more the wind is released, therefore, the effect of reducing the load is increased, however, the power generation efficiency is reduced by the setting. It is thus preferable that the limit value is set to, for example, 1/2 to 1/4 of a normal limit value so that both the load reduction and the power generation efficiency are achieved.

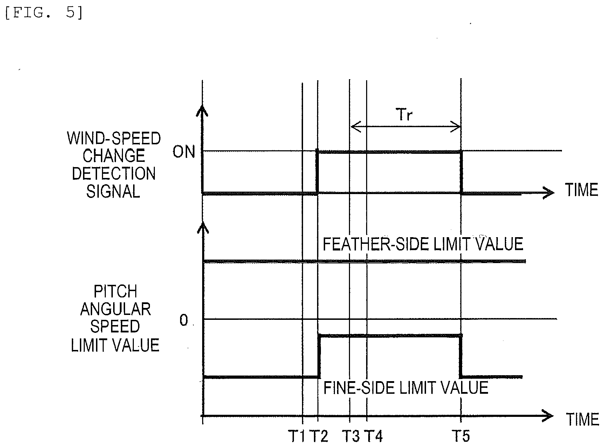

Fig. 5 shows an example of temporal variation of the pitch angular speed limit value in the pitch-angular speed limiting unit 103 according to Embodiment 1. In Fig. 5, the horizontal axis represents the time and the vertical axis represents the wind-speed change detection signal and the pitch angular speed limit value from an upper part of the drawing. Normally, the fine-side limit value and the feather-side limit value are set to approximately the same value, however, while the wind speed is increased (between time T1 to time T4), during a period in which the wind-speed change rate exceeds a threshold value (between time T2 to time T3) and during the prescribed period Tr after that (between time T3 to time T5), the wind-speed change detection signal is ON, and the fine-side limit value is drastically changed to the value close to "0".

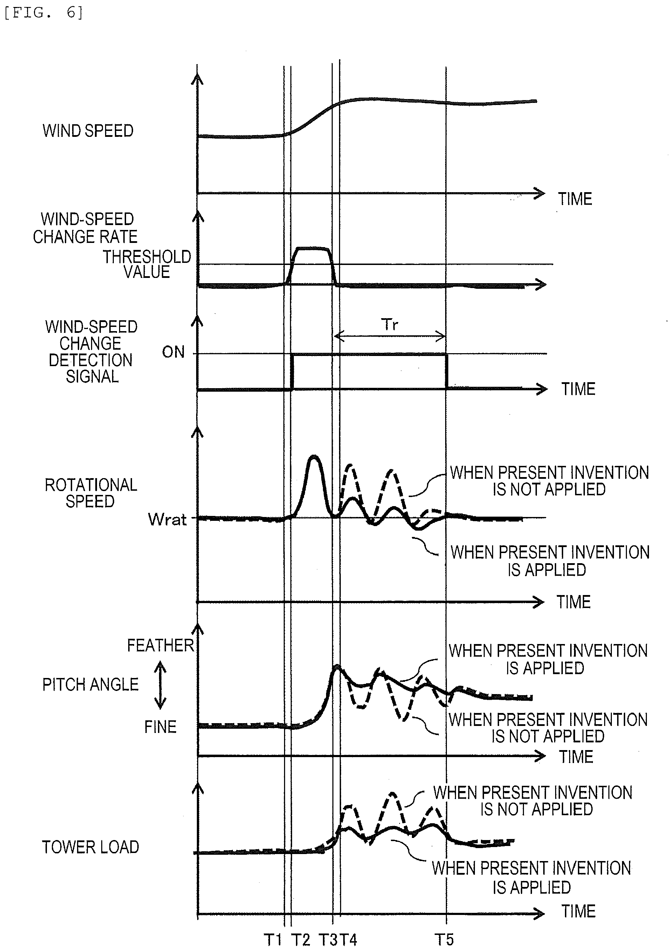

Fig. 6 is a schematic diagrams showing advantages of the invention according to Embodiment 1. In Fig. 6, the horizontal axis represents the time and the vertical axis represents the wind speed, the wind-speed change rate, the wind-speed change detection signal, the rotational speed, the pitch angle and the tower load from an upper part of the drawing. Broken lines shown in the rotational speed, the pitch angle and the tower load in Fig. 6 indicate results obtained when the present embodiment is not applied, and solid lines indicate results obtained when the present embodiment is applied.

Fig. 6 shows an example in which the wind speed is increased from time T1 to time T4, and the wind-speed change rate exceeds a threshold value in a period from time T2 to time T3 with the change of the wind speed. As the rotational speed is increased with the increase of the wind speed, the pitch angle control is performed so that the rotational speed is kept to be constant (Wrat). In the case where the present embodiment is not applied, variation of the pitch angle becomes oscillatory due to responsivity in pitch angle control, and the pitch angle changed to the feather (releasing the wind) side once returns to the fine (receiving the wind) side due to the transient response, then, a large amount of wind is received in a high wind-speed state, as a result, sudden increases of the load on the equipment occur.

On the other hand, in the case where the present embodiment is applied, during the period in which the wind-speed change rate exceeds the threshold value (between time T2 to time T3) and during the prescribed period Tr after that (between time T3 to time T5), the wind-speed change detection signal is ON and the movement of the pitch angle to the fine side is suppressed, therefore, the wind can be released to thereby suppress variations in the pitch angle and the rotational speed and prevent the increase of the load on the equipment.

Concerning the threshold value of the wind-speed change rate, the safety can be secured when the threshold value is set to a small value, however, the wind-speed change detection signal is turned on frequently and the power generation efficiency is reduced, therefore, an appropriate value should be set. For example, it is preferable to set an increase in wind speed for one second to approximately 0.5 to 1m/s. Also concerning the prescribed period Tr during which movement of the pitch angle to the fine side is suppressed, the longer the prescribed period Tr is, the more the stability is increased, however, the power generation is reduced. It is necessary to set the period so that plural cycles of oscillation of the pitch angle are included for obtaining sufficient effect of the present embodiment, therefore, it is preferable to set the period to, for example, 3 to 5 cycles.

### [Embodiment 2]

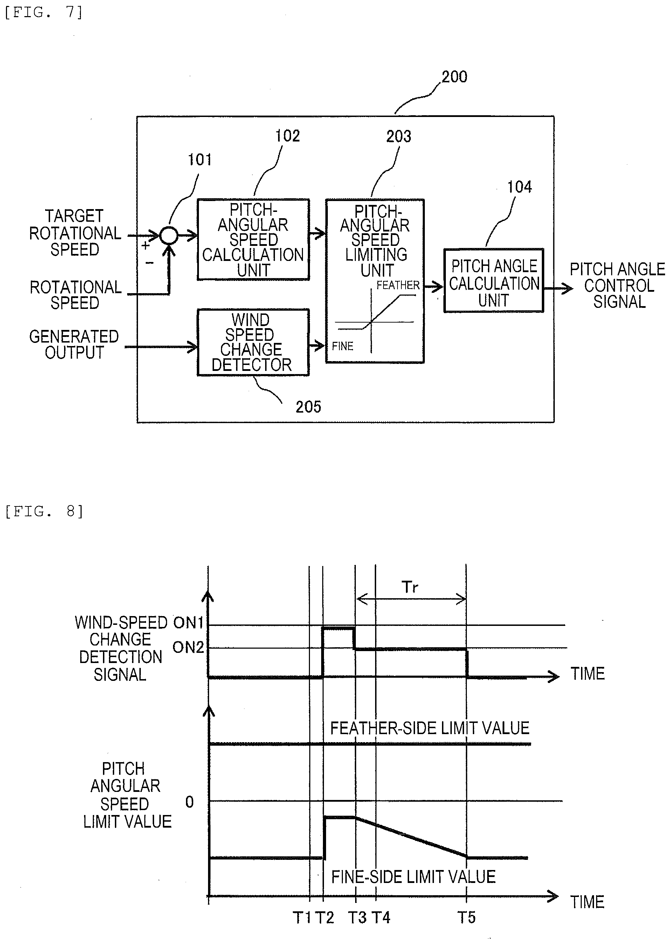

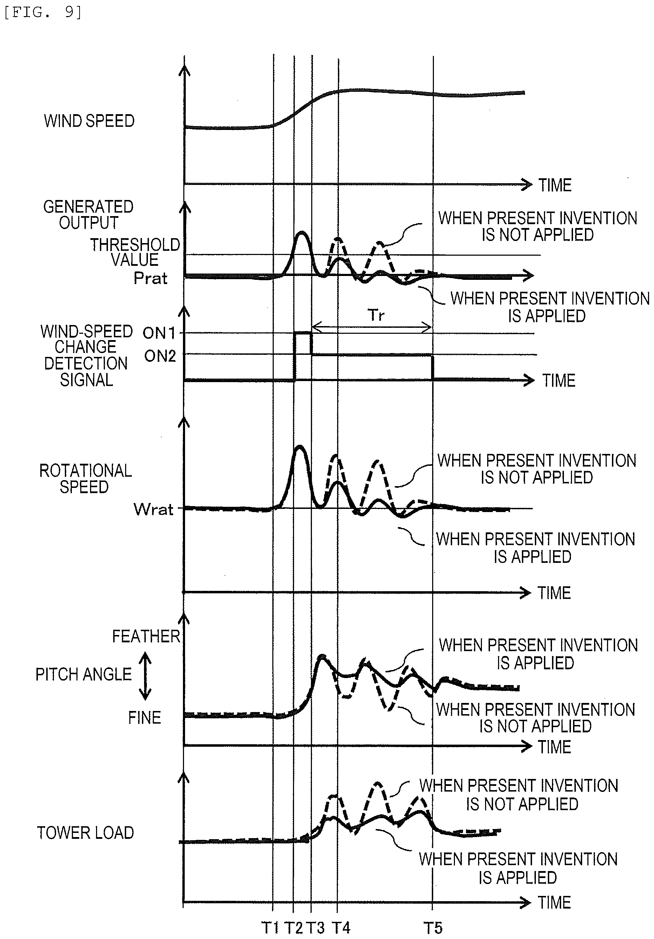

A wind turbine system according to Embodiment 2 will be explained with reference to Fig. 7 and Fig. 9. The detailed explanation for points overlapping with Embodiment 1 is omitted.

Fig. 7 is a block diagram showing an overview of an example of a pitch angle controller of the wind turbine system 1 according to Embodiment 2. A pitch angle control device 200 according to Embodiment 2 is provided in the controller 12, including the subtracter 101, the pitch-angular speed calculation unit 102, a pitch-angular speed limiting unit 203, the pitch angle calculation unit 104 and a wind speed change detector 205. The subtracter 101, the pitch-angular speed calculation unit 102 and the pitch angle calculation unit 104 are the same as the components of the pitch control device 100 according to Embodiment 1.

In the wind speed change detector 205, when the generated output is increased to a threshold value or more, the wind-speed change detection signal is turned on for the prescribed period Tr. While the generated output exceeds the threshold value, the prescribed period Tr is updated. Actually, the wind-speed change detection signal is set to ON1 during the period in which the generated output exceeds the threshold value, and the wind-speed change detection signal is set to ON2 during the prescribed period Tr after that. The pitch-angular speed limiting unit 203 operates almost in the same manner as the pitch-angular speed limiting unit 103 of the pitch control device 100 according to Embodiment 1, which is different in a point that the fine-side limit value continuously varies while the wind-speed change detection signal is ON2.

Though variation in wind speed is detected by the wind speed itself in Embodiment 1, actual detection values of the wind speeds largely vary for a short period of time, therefore, a time average value is commonly used. It is necessary to particularly set the average time to be longer in order to stably calculate the wind-speed change rate, therefore, detection may be delayed for the time. Accordingly, attention is focused to a point in which a follow-up delay in rotational speed control is generated and the generated output is also increased due to the sudden increase in wind speed, and a change in wind speed is detected when the generated output becomes the threshold value or more in Embodiment 2. The threshold value of the generated output is set to, for example, approximately +3 to 5% of the rated generated output so as to realize both the load reduction and the power generation efficiency.

Fig. 8 shows an example of temporal variation of the pitch angular speed limit value in the pitch-angular speed limiting unit 203 according to Embodiment 2. In Fig. 8, the horizontal axis represents the time and the vertical axis represents the wind-speed change detection signal and the pitch angular speed limit value from an upper part of the drawing. Normally, the fine-side limit value and the feather-side limit value are set to approximately the same value, however, while the wind speed is increased (between time T1 to time T4) and during a period in which the generated output exceeds a threshold value and the wind-speed change detection signal is ON1 (between time T2 to time T3), the fine-side limit value is drastically changed to a value close to "0". During the prescribed period Tr (between time T3 to time T5) in which the wind-speed change detection signal is ON2 after that, the fine-side limit value changes from the value obtained when the wind-speed change detection signal is ON1 continuously in a constant rate in a slope shape and returns to the normal value at time T5. According to the above, the power generation efficiency can be improved while securing stability and continuity in the pitch angle control.

Fig. 9 is a schematic diagram showing advantages of the invention according to Embodiment 2. In Fig. 9, the horizontal axis represents the time T and the vertical axis represents the wind speed, the generated output, the wind-speed change detection signal, the rotational speed, the pitch angle and the tower load from an upper part of the drawing. Broken lines shown in the generated output, the rotational speed, the pitch angle and the tower load in Fig. 9 indicate results obtained when the present embodiment is not applied, and solid lines indicate results obtained when the present embodiment is applied.

Fig. 9 shows an example in which the wind speed is increased from time T1 to time T4, and the generated output exceeds a threshold value in a period from time T2 to time T3 with the change of the wind speed. As the rotational speed is increased with the increase of the wind speed, the pitch angle control is performed so that the rotational speed is kept to be constant (Wrat). In the case where the present embodiment is not applied, variation of the pitch angle becomes oscillatory due to responsivity in pitch angle control, and the pitch angle changed to the feather (releasing the wind) side once returns to the fine (receiving the wind) side due to the transient response, then, a large amount of wind is received in a high wind-speed state, as a result, sudden increases of the load on the equipment occur.

On the other hand, in the case where the present embodiment is applied, during the period in which the generated output exceeds the threshold value (between time T2 to time T3), the wind-speed change detection signal is ON1, and the wind-speed change detection signal is ON2 during the prescribed period Tr after that (between time T3 to time T5), then, the limit value of the pitch angle in the fine side is changed and the movement is suppressed, therefore, the wind can be released to thereby suppress variations in the pitch angle and the rotational speed and prevent the increase of the load on the equipment.

Though the fine-side limit value is changed continuously in a slope shape while the wind-speed change detection signal is ON2 in Fig. 8, it is also preferable that the limit value changes in a curved shape or in a stepped shape as well as the limit value can be changed from a time point while the wind-speed change detection signal is ON1.

### [Embodiment 3]

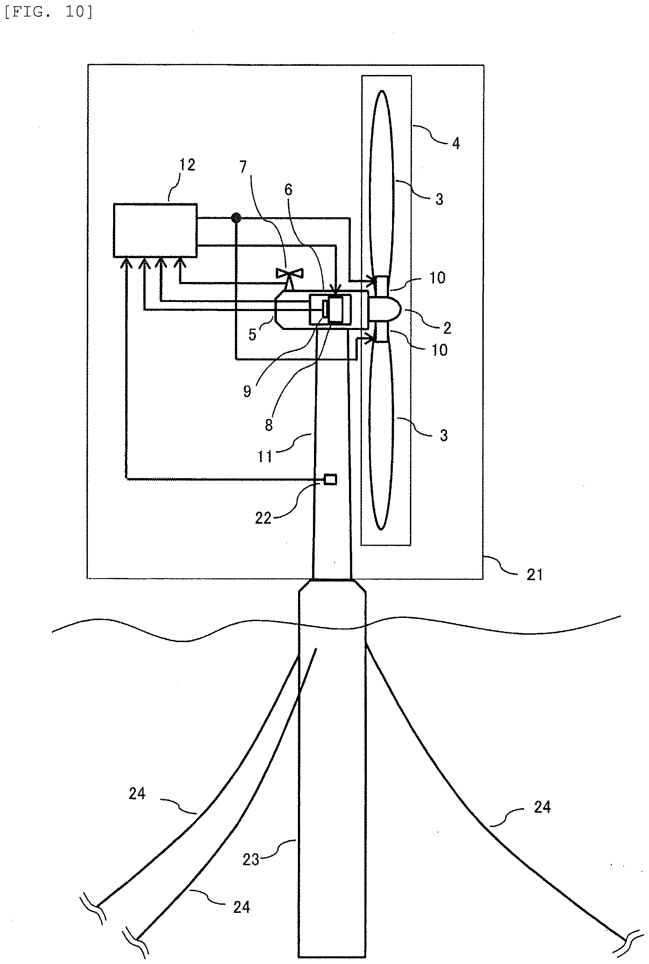

A wind turbine system according to Embodiment 3 will be explained with reference to Fig. 10 to Fig. 14. The detailed explanation for points overlapping with Embodiment 1 is omitted.

Fig. 10 is a schematic configuration diagram showing the entire floating wind turbine system to which the present embodiment can be applied in Embodiment 3. A wind turbine system 21 is the same as the wind turbine system 1 of Embodiment 1 except for a portion where an inclination angle sensor 22 is provided inside the tower 11, and an inclination angle outputted from the inclination angle sensor 22 is inputted to the controller 12. The wind turbine system 21 is installed on a floating body 23, and the floating body 23 is moored at a prescribed position on the ocean by plural mooring chains 24 extending in multi-directions.

Embodiment 3 takes up the floating wind turbine system in which the wind turbine system is installed on the moored floating body for performing wind power generation on the deep-water ocean. As the floating body vibrates due to the wind and waves in the floating wind turbine system, the controller 12 performs control of suppressing floating vibration in which the pitch angle is operated so as to set inclination angles outputted from the inclination angle sensor 22 to be constant.

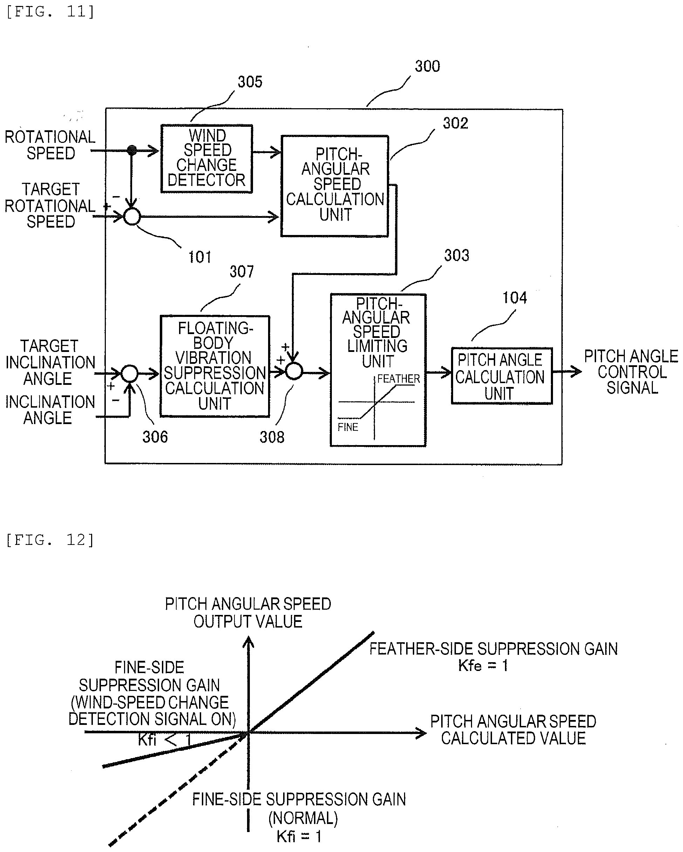

Fig. 11 is a block diagram showing an overview of an example of a pitch angle controller of the wind turbine system 21 according to Embodiment 3. A pitch angle control device 300 according to Embodiment 3 is provided in the controller 12, including the subtracter 101, a pitch-angular speed calculation unit 302, a pitch-angular speed limiting unit 303, the pitch angle calculation unit 104, a wind speed change detector 305, a subtractor 306, a floating-body vibration suppression calculation unit 307 and an adder 308. The subtracter 101 and the pitch angle calculation unit 104 are the same as the components of the pitch control device 100 according to Embodiment 1.

In the subtracter 101, a deviation between a target rotation speed and a rotational speed is calculated, and the deviation is inputted to the pitch-angular speed calculation unit 302. In the pitch-angular speed calculation unit 302, a pitch angular speed for controlling the rotational speed is calculated from the inputted deviation and the pitch angular speed is outputted. In the subtractor 306, a deviation between a target inclination angle and an inclination angle to be inputted is calculated, and the deviation is inputted to the floating-body vibration suppression calculation unit 307. In the floating-body vibration suppression calculation unit 307, a pitch angular speed for controlling floating vibration suppression is calculated from the inputted deviation and the pitch angular speed is outputted. In the adder 308, the pitch angular speed from the pitch-angular speed calculation unit 302 is added to the pitch angular speed from the floating-body vibration suppression calculation unit 307 to be inputted to the pitch-angular speed limiting unit 303. In the pitch-angular speed limiting unit 303, the inputted pitch angular speed is limited so as to be a limit value or less of the pitch angular speed determined by the ability of the pitch-angle control device 10 and so on, and the limited pitch angular speed is outputted. In the pitch angle calculation unit 104, the limited pitch angular speed is integrated and converted into a pitch angle, which is outputted as a pitch angle control signal. In the pitch-angular speed limiting unit 303, the fine-side limit value is constant and is not changed, which differs from the pitch-angular speed limiting unit 103 according to Embodiment 1 and the pitch-angular speed limiting unit 203 according to Embodiment 2. According to the above configuration, the movement of the pitch angle to the fine side concerning the rotational speed control can be suppressed without affecting the control of suppressing floating body vibration.

In the wind speed change detector 305, when the rotational speed is increased to a threshold value or more, the wind-speed change detection signal inputted to the pitch-angular speed calculation unit 302 is turned on for the prescribed period Tr. In Embodiment 3, attention is focused to a point in which a follow-up delay in rotational speed control is generated and the rotational speed is also increased due to the sudden increase in wind speed, and a change in wind speed is detected when the rotational speed becomes the threshold value or more in Embodiment 3. The threshold value of the rotational speed is set to, for example, approximately +3 to 5% of the rated rotational speed (Wrat) so as to realize both the load reduction and the power generation efficiency. While the rotational speed exceeds the threshold value, the prescribed period Tr is updated. Actually, the wind-speed change detection signal is set to ON1 during the period in which the generated output exceeds the threshold value, and the wind-speed change detection signal is set to ON2 during the prescribed period Tr after that. In the pitch-angular speed calculation unit 302, a pitch speed calculated value is multiplied by a suppression gain for suppressing pitch operation to be outputted. The suppression gain is separated into a feather-side suppression gain Kfe corresponding to the feather-side movement and a fine-side suppression gain Kfi corresponding to the fine-side movement, which are both set to 1 (no suppression) in the normal state. While the wind-speed change detection signal is ON, the feather-side suppression gain Kfe does not change, however, the fine-side suppression gain Kfi is changed to a smaller value (<1) than a normal value, which suppresses the movement of the pitch angle to the fine side.

Fig. 12 shows an example of an action of the suppression gains in the pitch-angular speed calculation unit 302 according to Embodiment 3. The horizontal axis of Fig. 12 represents the pitch-angular speed calculated value and the vertical axis represents the pitch-angular speed output value suppressed by the suppression gain. While the wind-speed change detection signal is ON, the fine-side suppression gain Kfi is changed to a smaller value than "1", and the fine-side pitch angular speed output is limited. The fine-side suppression gain Kfi during the period in which the wind-speed change detection signal is ON can be set to "0". The closer to "0" the set value is, the more the wind is released, therefore, the effect of reducing the load is increased, however, the power generation efficiency is reduced by the setting. It is thus preferable that the suppression gain Kfi is set to, for example, 1/2 to 1/4 so that both the load reduction and the power generation efficiency are achieved.

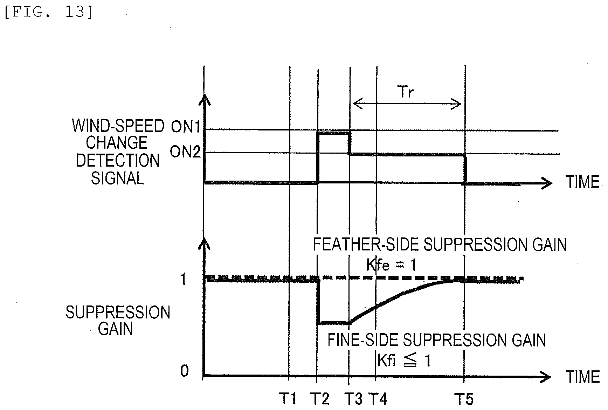

Fig. 13 shows an example showing temporal variation of the suppression gains in the pitch-angular speed calculation unit 302 according to Embodiment 3. In the present embodiment, the fine-side suppression gain Kfi is determined not by using the pitch-angular speed limiting unit 303 but by using the pitch-angular speed calculation unit 302. In Fig. 13, the horizontal axis represents the time and the vertical axis represents the wind-speed change detection signal and the suppression gain from an upper part of the drawing. The fine-side suppression gain Kfi and the feather-side suppression gain Kfe are normally set to "1" . During a period in which the wind speed is increased (between time T1 to time T4) and a period in which the rotational speed exceeds the threshold value and the wind-speed change detection signal is ON1 (between time T2 to time T3), the fine-side suppression gain Kfi is changed to a value smaller than "1" to be maintained, and during the prescribed period Tr (between time T3 to time T5) in which the wind-speed change detection signal is ON2 after that, the suppression gain Kfi varies in a curved shape from the value obtained when the wind-speed change detection signal is ON1 and returns to the normal value (1) at time T5. Accordingly, the power generation efficiency can be improved while securing stability and continuity in the pitch angle control. Variation of the fine-side suppression gain Kfi during the period in which the wind-speed change detection signal is ON2 may be set in a slope shape or a stepped shape, or the fine-side suppression gain Kfi may hold the value obtained when the wind-speed change detection signal is ON1. The fine-side suppression gain Kfi can be also changed from a time point while the wind-speed change detection signal is ON1.

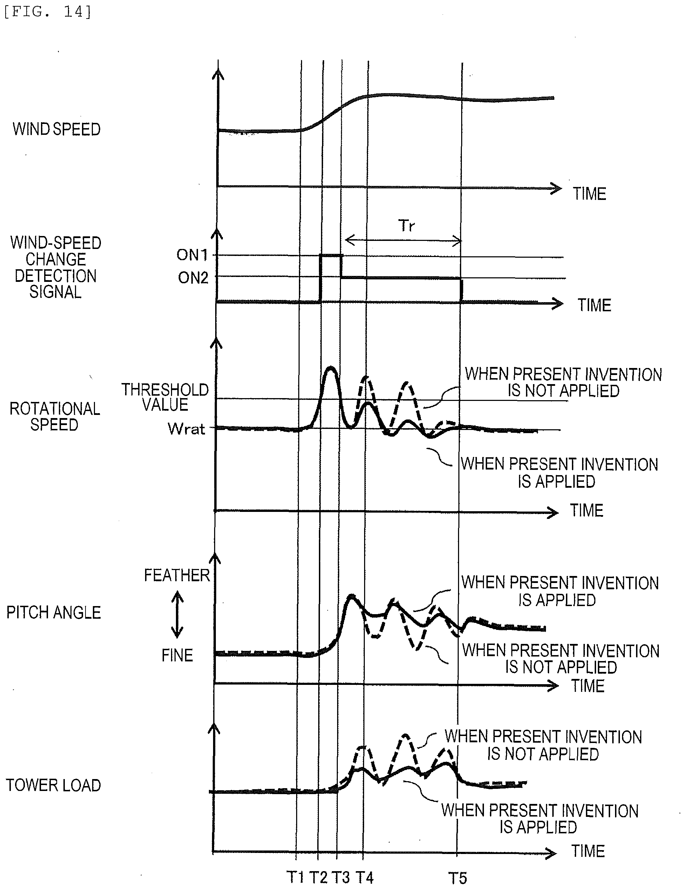

Fig. 14 is a schematic diagram showing advantages of the invention according to Embodiment 3. In Fig. 14, the horizontal axis represents the time and the vertical axis represents the wind speed, the wind-speed change detection signal, the rotational speed, the pitch angle and the tower load from an upper part of the drawing. Broken lines shown in the rotational speed, the pitch angle and the tower load in Fig. 14 indicate results obtained when the present embodiment is not applied, and solid lines indicate results obtained when the present embodiment is applied.

Fig. 14 shows an example in which the wind speed is increased from time T1 to time T4, and the rotation speed exceeds a threshold value in a period from time T2 to time T3 with the change of the wind speed. As the rotational speed is increased with the increase of the wind speed, the pitch angle control is performed so that the rotational speed is kept to be constant (Wrat). In the case where the present embodiment is not applied, variation of the pitch angle becomes oscillatory due to responsivity in pitch angle control, and the pitch angle changed to the feather (releasing the wind) side once returns to the fine (receiving the wind) side due to the transient response, then, a large amount of wind is received in a high wind-speed state, as a result, sudden increases of the load on the equipment occur.

On the other hand, in the case where the present embodiment is applied, during the period in which the rotational speed exceeds the threshold value (between time T2 to time T3), the wind-speed change detection signal is ON1, and the wind-speed change detection signal is ON2 during the prescribed period Tr after that (between time T3 to time T5), then, the fine-side suppression gain Kfi of the pitch angle is changed and the movement is suppressed, therefore, the wind can be released to thereby suppress variations in the pitch angle and the rotational speed and prevent the increase of the load on the equipment.

The rotational speed can be measured by the rotor 4 in addition to the rotational speed sensor 9 provided in the generator 6 as well as can be calculated from an angular value of a sensor output (not shown in the drawing) for detecting a rotation position (azimuth angle) of the blades 3 provided in the rotor 4. The position of installing the inclination angle sensor 22 is not limited to the tower 11 but may be placed at the floating body 23 itself or a position where the sensor operates in conjunction with the floating body 23, and for example, can be installed inside the nacelle 5.

The present embodiment is not limited to the above embodiments and various modification examples are included. For example, the above embodiments have been explained in detail for explaining the present embodiment easily to understood, and are not always limited to the embodiment including all explained components. It is possible to replace part of components of a certain embodiment with a component of another embodiment, and it is possible to add a component of another embodiment to components of a certain embodiment. Part of components of respective embodiments can be added, deleted and replaced with respect to other components.

### Reference Signs List

1, 21 ... wind turbine system, 2 ... hub, 3 ... blade, 4 ... rotor, 5 ... nacelle, 6 ... generator, 7 ... wind direction/speed meter, 8 ... generator torque control device, 9 ... rotational speed sensor, 10 ... pitch-angle control device, 11 ... tower, 12 ... controller, 22 ... inclination angle sensor, 23 ... floating body, 24 ... mooring chain, 100, 200, 300 ... pitch angle control device, 101, 306 ... subtracter, 102, 302 ... pitch-angular speed calculation unit, 103, 203, 303 ... pitch-angular speed limiting unit, 104 ... pitch angle calculation unit, 105, 205, 305 ... wind speed change detector, 307 ... floating-body vibration suppression calculation unit, 308 ... adder

## Claims

1. A wind turbine system comprising:
blades (3) rotating by receiving the wind;
a pitch drive device controlling a pitch angle of each blade (3); and
a control device (100) outputting a control signal for suppressing a movement of the pitch angle to a fine direction to the pitch drive device when an increase in wind speed for a prescribed amount or more is detected while performing pitch angle control so that a rotational speed of the blades (3) or equipment rotating in conjunction with rotation of the blades (3) maintains a rated rotational speed.

2. The wind turbine system according to claim 1,
wherein the movement of the pitch angle to the fine direction is suppressed while the wind speed is increased for a prescribed amount or more as well as for a prescribed period after the increase in wind speed for a prescribed amount or more is completed.

3. The wind turbine system according to claim 2,
wherein the prescribed period corresponds to 3 to 5 cycles of pitch angle vibration occurring when suppressing the movement of the pitch angle to the fine direction.

4. The wind turbine system according to any one of claims 1 to 3,
wherein the prescribed amount concerning the increase in wind speed is set in a range of 0.5 to 1m/S as a change in wind speed for one second.

5. The wind turbine system according to any one of claims 1 to 4,
wherein the control signal used when the movement of the pitch angle to the fine direction is suppressed is set in a range of 1/2 to 1/4 of a limit value at a normal time.

6. The wind turbine system according to any one of claims 1 to 5,
wherein, when a detected value varying in conjunction with an increasing speed in wind speed or a change in wind speed is increased for a prescribed value or more, the increase in wind speed for a prescribed amount or more is detected.

7. The wind turbine system according to claim 6,
wherein the detected value varying in conjunction with the increasing speed or the change in wind speed is a rotational speed in the blades (3) or in the equipment, and
when the rotational speed exceeds a prescribed value, the increase in wind speed for a prescribed amount or more is detected.

8. The wind turbine system according to any one of claims 1 to 7,
wherein, when the increase in wind speed for a prescribed amount or more is detected again during a period in which the movement of the pitch angle to the fine direction is suppressed, the period in which the movement of the pitch angle to the fine direction is suppressed is started from a time point when an increase in wind speed for a prescribed amount or more is detected again.

9. The wind turbine system according to any one of claims 1 to 8,
wherein the control device (100) reduces a gain or a speed limit value with respect to the control signal to be lower than a normal state when the control signal to the pitch drive device is a value of the fine direction during the prescribed period.

10. A method of controlling a wind turbine system including blades (3) rotating by receiving the wind, a pitch angle of which is capable of being controlled, comprising the step of:
suppressing a movement of the pitch angle to a fine direction when an increase in wind speed for a prescribed amount or more is detected while performing pitch angle control so that a rotational speed of the blades (3) or equipment rotating in conjunction with rotation of the blades maintains a rated rotational speed.
